# DEMANDE DE BREVET EUROPEEN

(11) **EP 0 776 139 A2**
(43) Date de publication de la demande: **28.05.1997**
(21) Numéro de dépôt: 96203253.8
(22) Date de dépôt: 20.11.1996
(51) Int. Cl.: H04Q 7/32

(54) **Poste téléphonique comportant un module d'identification**

(30) Priorité: 22.11.1995 FR 9513867
(71) Demandeur: PHILIPS ELECTRONIQUE GRAND PUBLIC, 92150 Suresnes (FR); Philips Electronics N.V., 5621 BA Eindhoven (NL)
(72) Inventeur: Thauvin, Philippe, 75008 Paris (FR); Evano, Jean-Michel, 75008 Paris (FR); Chivallier, Laurent, 75008 Paris (FR)
(74) Mandataire: Chaffraix, Jean

(57) **Abrégé**

Ce poste comporte :
- une partie émission-réception (40, 42) pour émettre et recevoir des signaux de transmission sur un milieu de propagation pour permettre une connexion sur un réseau téléphonique,
- un ensemble de commande (15) pour recevoir des commandes de la part de l'usager,
- un ensemble de visualisation (17) pour fournir des indications de fonctionnement à l'usager,
- un circuit de connexion (35) pour connecter un circuit d'identification amovible,
- un ensemble de gestion (50) pour gérer le fonctionnement du poste.

L'invention propose une carte SIM (30) comportant une marque pour définir un fonctionnement dit de démonstration, pour : autoriser le fonctionnement de l'ensemble de commande, autoriser le fonctionnement de l'ensemble de visualisation, inhiber le fonctionnement de la partie émission-réception pour une connexion normale avec le réseau.

Application : postes GSM.

## Description

La présente invention concerne un poste téléphonique fonctionnant à l'aide d'un circuit d'identification amovible, comportant :
- une partie émission-réception pour émettre et recevoir des signaux de transmission sur un milieu de propagation pour permettre une connexion sur un réseau téléphonique,
- un ensemble de commande pour recevoir des commandes de la part de l'usager,
- un ensemble de visualisation pour fournir des indications de fonctionnement à l'usager,
- un circuit de connexion pour connecter ledit circuit d'identification amovible,
- un ensemble de gestion pour gérer le fonctionnement du poste radiomobile comportant un module d'identification.

L'invention concerne aussi un module d'identification convenant à un tel poste.

L'invention se rapporte plus particulièrement aux postes téléphoniques du genre radiomobile, connus sous le nom de GSM fonctionnant en réseaux. Ceux-ci sont exploités par différents opérateurs.

La norme qui régit ces réseaux impose qu'il soit toujours possible de faire un appel d'urgence (pompiers, police, etc..).

Le document de brevet PCT n° WO91/12698 décrit un tel poste. Dans ce document, on propose d'utiliser un circuit d'identification amovible qui active des fonctions prédéterminées. Parmi celles-ci, subsiste toujours une fonction de transmission d'informations dans le réseau autre que les appels d'urgence.

Cette fonction de transmission d'informations dans le réseau peut constituer un inconvénient pour certaines applications. En effet, il existe des applications pour lesquelles aucune transmission dans le réseau, hormis les appels d'urgence, n'est souhaitée. Une première application se rapporte au cas, par exemple, du vendeur de terminaux qui doit informer sa clientèle sur les possibilités des produits. La mise en oeuvre, à cette occasion, des mécanismes d'authentification et de la localisation d'abonné chargerait inutilement le réseau. De plus, il est difficile de réserver sur chaque point de vente une ou plusieurs vraies cartes d'abonné pour le seul besoin des démonstrations. Une deuxième application est la sauvegarde de l'environnement du mobile et sa restauration. Ceci peut se rencontrer lorsque le poste doit aller en réparation et que l'environnement programmé par l'usager risque d'être perdu.

La présente invention propose un poste radiomobile du genre mentionné dans le préambule qui permet d'effectuer les opérations décrites ci-dessus sans qu'une connexion soit établie auprès des opérateurs.

Pour cela un tel poste est remarquable en ce qu'il est prévu un circuit d'identification amovible comportant une marque pour définir un fonctionnement dit de démonstration. Ainsi, grâce à la mesure proposée par l'invention, il devient possible que l'ensemble de gestion comporte des moyens de détection de cette marque pour :
- autoriser le fonctionnement de l'ensemble de commande,
- autoriser le fonctionnement de l'ensemble de visualisation,
- inhiber le fonctionnement de la partie émission-réception pour une connexion normale avec le réseau.

La description suivante faite en regard des dessins ci-annexés, le tout donné à titre d'exemples non limitatifs, fera bien comprendre comment l'invention peut être réalisée.

La figure 1 montre un poste radiomobile conforme à l'invention.

La figure 2 montre un schéma bloc du poste de la figure 1.

La figure 3 est un premier bloc diagramme destiné à l'explication du poste de l'invention.

La figure 4 est un deuxième bloc diagramme destiné à l'explication du poste de l'invention.

La figure 5 est un troisième bloc diagramme destiné à l'explication du poste de l'invention.

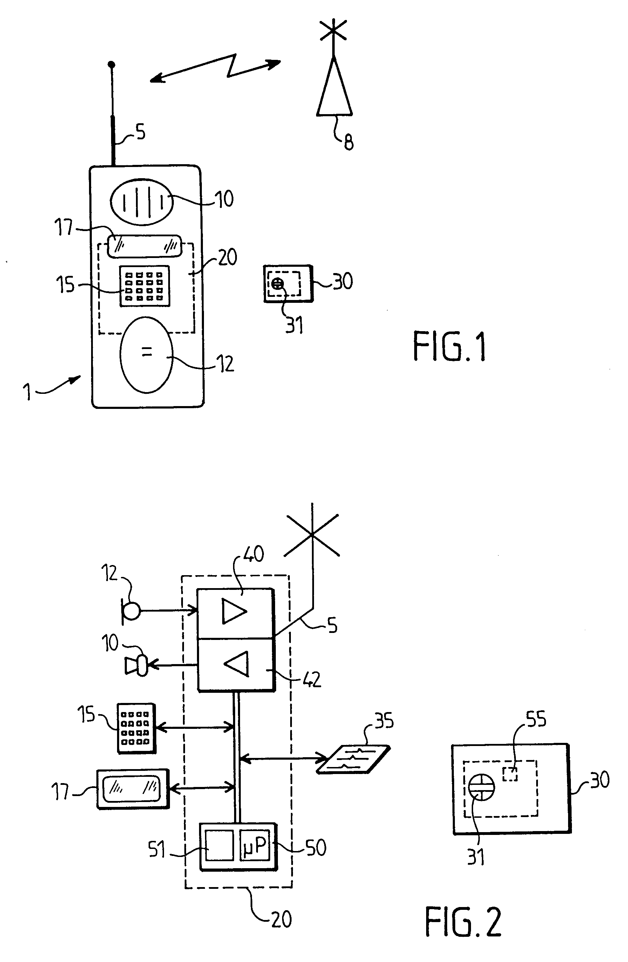

A la figure 1, la référence 1 indique un poste radiomobile conforme à l'invention. Ce poste est muni d'une antenne 5 qui lui permet de recevoir et d'émettre des ondes vers une station de raccordement 8 d'un réseau radioélectrique du type GSM. Le poste 1 comporte un écouteur 10, un microphone 12, un clavier 15 et un écran de visualisation 17. Les pointillés représentent une partie électronique 20 située à l'intérieur du poste. Selon les normes du GSM (I-ETS 300 045-1 ou pr ETS 30), il est prévu un circuit d'identification amovible se présentant sous la forme d'une carte SIM de format ISO ou de format dit "plug-in" qui porte sur la figure 1, la référence 30. Cette carte est pourvue de contacts électriques 31 qui assurent l'interface avec un connecteur 35 faisant partie du poste radiomobile 1. Ce connecteur est montré, lui, sur la figure 2.

Sur cette figure 2, les éléments communs avec ceux de la figure 1 portent les mêmes références. Il y est détaillé la structure de la partie électronique 20.

Cette partie 20 comprend un ensemble d'émission 40 et un ensemble de réception 42 pour émettre et pour recevoir différentes informations usuelles dans la technique GSM, notamment celles provenant du microphone 12 et celles qui concernent l'écouteur 10. Un ensemble à microprocesseur 50 assure la gestion des éléments suivants : les parties émission et réception 40 et 42, un ensemble de commande pour recevoir des commandes de la part de l'usager constitué par un clavier 15 et un ensemble de visualisation pour fournir des indications de fonctionnement à l'usager constitué par un écran de visualisation 17 et gère aussi l'échange d'informations avec le module SIM 30 via les connecteurs 35 et 31. Cet ensemble 50 comporte notamment une mémoire 51 de type EPROM de préférence destinée à contenir un fichier de configuration de l'abonné et aussi un répertoire de numéros abrégés.

On rappelle que le module ou la carte SIM 30 comprend un ensemble de fichiers mémorisables dans une mémoire 55 (se reporter à la norme précitée). Ces fichiers sont accessibles à l'ensemble 50.

Conformément à l'invention, parmi ces fichiers, on en réserve un pour y inscrire un mot significatif pour discerner son mode de fonctionnement par rapport aux autres modules fournis par les opérateurs. Ainsi, par exemple, on inscrit le mot "DMO" dans le fichier EF_{AD} défini par ladite norme, ceci constitue une première mesure de l'invention. Une autre mesure de l'invention va consister à prévoir des instructions pour l'ensemble à microprocesseur 50.

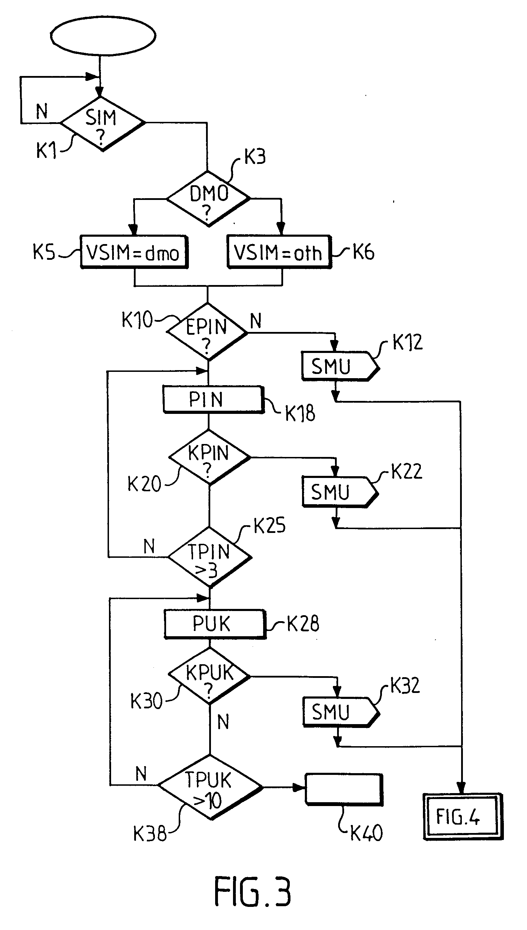

Ceci est montré par un ordinogramme représenté à la figure 3. La première étape de fonctionnement est indiquée à la case K1. Cette case montre la détection de la présence d'un module SIM sur le connecteur. Tant qu'un module n'est pas inséré dans le poste 1, on reste dans cette phase de fonctionnement indiquée à la case K1. Dès qu'un module est inséré, on passe à la case K3, où l'on va examiner la présence du mot DMO. Si ce mot est présent, un indicateur VSIM est affecté du mot "dmo" à la case K5. Si ce mot n'est pas présent, l'indicateur contient le mot "oth" ce qui est montré à la case K6. On passe à la case K10 qui teste la nécessité d'entrer un code d'identification personnel (PIN). Si cette entrée n'est pas nécessaire, on effectue, à la case K12 une procédure SMU qui implique le module SIM. S'il faut entrer un code de personnalisation on va à la case K18. Puis, le code entré, le module SIM teste s'il est correct à la case K20. Si c'est le cas, on va à la case K22 qui est un appel à la procédure précitée SMU. Si le code est incorrect, on va effectuer un autre essai. On teste à la case K25 si ce nombre d'essais excède 3, par exemple. Ce nombre d'essais est géré à l'intérieur du module 30. Si ce nombre n'est pas atteint, on retourne à la case K18. S'il est atteint on va à la case K28 pour saisir le code PUK qui est un code de déblocage du PIN comportant huit caractères. Le module SIM teste ce code à la case K30, s'il est correct on va à la case K32 qui est un appel à ladite procédure SMU. S'il n'est pas correct, on va effectuer, à nouveau, une saisie de ce code. On teste à la case K38 si le nombre d'essais n'excède pas dix. S'il n'y a pas excès, on retourne à la case K28. S'il y a excès, le module SIM se bloque et ne permet pas l'initialisation du poste.

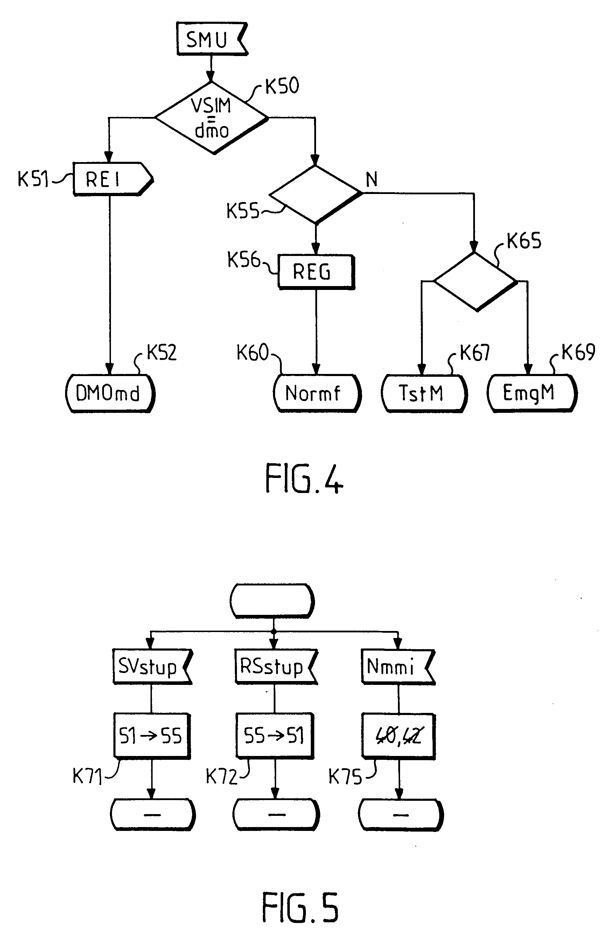

Les moyens de l'invention vont apparaître dans l'ordinogramme de la figure 4 qui explicite la procédure SMU dont il a été question.

Cette procédure débute par le test de l'indicateur VSIM (case K50). Si cet indicateur contient le mot "dmo", on effectue, à la case K51, une procédure REI, qui permet au poste d'admettre des appels d'urgence, avant de passer dans le traitement DMOmd (case K52). Si l'indicateur VSIM ne contient pas le mot "dmo" on passe à la case K55 qui explicite le début d'un fonctionnement normal du poste. On teste si le module est du type normal. Si oui, on effectue, à la case K56 une procédure REG avant de passer au mode de fonctionnement normal Normf (case K60) c'est-à-dire la procédure de rattachement au réseau pour lequel l'utilisateur a souscrit un abonnement. Si le module n'est pas du type normal, on passe alors de la case K55 à la case K65 où l'on teste la possibilité que ce module est un module de test (utilisé par les sociétés habilitées à donner des agréments). Si c'est bien un module de test, on effectue donc ces tests dans une procédure TstM (case K67). Si ce n'est pas un module de test, on effectue à la case K69 une procédure EmgM qui est une procédure permettant uniquement de gérer des appels d'urgence.

L'ordinogramme de la figure 5 montre les possibilités qu'offre la procédure DMOmd.

Une première possibilité consiste à sauvegarder sur le module la configuration du poste depuis les fichiers de l'ensemble 50 contenu dans la mémoire 51 vers un fichier de sauvegarde du module 30 contenu dans la mémoire 55. Ceci est indiqué à la case K71.

Une deuxième possibilité consiste à effectuer l'opération inverse c'est-à-dire à effectuer les transferts des fichiers du module vers le fichier de configuration du poste donc de la mémoire 55 vers la mémoire 51 (case K72).

Une troisième possibilité consiste à obtenir toutes les fonctions du poste : la configuration de l'affichage notamment, en d'autres termes interdire le fonctionnement des parties 40 et 42 (voir case K75). Le déclenchement de ces différentes possibilités est provoqué par détection d'un appui simultané de deux touches ou d'une séquence de touches sur le clavier du circuit de commande 15 selon les méthodes bien connues de la programmation.

## Revendications

1. Poste téléphonique fonctionnant à l'aide d'un circuit d'identification amovible, comportant :
- une partie émission-réception pour émettre et recevoir des signaux de transmission sur un milieu de propagation pour permettre une connexion sur un réseau téléphonique,
- un ensemble de commande pour recevoir des commandes de la part de l'usager,
- un ensemble de visualisation pour fournir des indications de fonctionnement à l'usager,
- un circuit de connexion pour connecter ledit circuit d'identification amovible,
- un ensemble de gestion pour gérer le fonctionnement du poste,
caractérisé en ce qu'il est prévu un circuit d'identification comportant une marque pour définir un fonctionnement dit de démonstration.

2. Poste téléphonique selon la revendication 1, dans lequel le circuit de gestion comporte une mémoire d'enregistrement de l'environnement de l'usager, et pour lequel le circuit d'identification amovible comporte un ensemble de fichiers, caractérisé en ce qu'une commande de sauvegarde de l'environnement usager est définie et en ce que l'ensemble de gestion comporte des moyens de détection de cette commande de sauvegarde pour sauvegarder cet environnement dans un fichier, dit fichier de sauvegarde, du module de circuit d'identification amovible.

3. Poste téléphonique selon la revendication 2, caractérisé en qu'une commande de restauration de l'environnement usager est définie et en ce que l'ensemble de gestion comporte des moyens de détection de cette commande de restauration pour restaurer cet environnement dans la mémoire d'environnement depuis le fichier de sauvegarde du module de circuit d'identification amovible.

4. Module d'identification convenant à un poste radiomobile selon l'une des revendications 1 à 3 comportant la marque dite de démonstration et au moins un fichier de sauvegarde.
